# EUROPÄISCHE PATENTSCHRIFT

(11) **EP 2 422 108 B1**
(45) Veröffentlichungstag und Bekanntmachung des Hinweises auf die Patenterteilung: **19.06.2013**
(21) Anmeldenummer: 10719250.2
(22) Anmeldetag: 16.04.2010
(51) Int. Cl.: F16D 65/14, F16D 65/56

(54) **PNEUMATISCH ODER ELEKTROMECHANISCH BETÄTIGBARE SCHEIBENBREMSE**
PNEUMATICALLY OR ELECTROMECHANICALLY ACTUATED DISC BRAKE
FREIN À DISQUE À COMMANDE PNEUMATIQUE OU ÉLECTROMÉCANIQUE

(30) Priorität: 21.04.2009 DE 102009018223
(43) Veröffentlichungstag der Anmeldung: 29.02.2012
(73) Patentinhaber: KNORR-BREMSE Systeme für Nutzfahrzeuge GmbH, 80809 München (DE)
(72) Erfinder: CAMILO-MARTINEZ, José, 82008 Unterhaching (DE); PESCHEL, Michael, 82296 Schöngeising (DE); TRIMPE, Robert, 82234 Wessling (DE)
(74) Vertreter: Mattusch, Gundula
(86) Internationale Anmeldenummer: PCT/EP2010/002339
(87) Internationale Veröffentlichungsnummer: WO 2010/121754

(56) Entgegenhaltungen:
- EP-A2- 1 319 858
- WO-A1-96/34216
- DE-A1- 4 323 292
- DE-U1- 9 312 121
- GB-A- 2 442 552

## Beschreibung

Die Erfindung betrifft eine pneumatisch oder elektromechanisch betätigbare Scheibenbremse nach dem Oberbegriff des Anspruchs 1.

Eine solche Scheibenbremse ist beispielsweise aus der DE 94 22 342 U1 bekannt, ebenso wie aus der DE 10 2004 037 771 A1. Darin ist jeweils eine Nachstelleinrichtung für eine pneumatisch betätigbare Scheibenbremse gezeigt und beschrieben, insbesondere in Schiebesattelausführung, die allerdings auch in pneumatisch betätigbaren Fest- oder Schwenksattelscheibenbremsen verwendbar ist.

Mittels einer solchen Nachstelleinrichtung erfolgt eine automatische Verschleißnachstellung, mit der erreicht wird, dass das sogenannte Lüftspiel, womit der Spalt zwischen den Bremsbelägen und der Bremsscheibe im unbetätigten Zustand gemeint ist, unabhängig vom Verschleißzustand und Verschleißverhalten der Bremsbeläge konstant gehalten wird.

Bei den bekannten Scheibenbremsen sind in den als Gewinderohre ausgebildeten Stellspindeln Nachsteller angeordnet, von denen einer über ein Antriebselement von einem Bremshebel angetrieben wird.

Ein solches Antriebselement besteht aus zwei Schaltstiften, die in eine Schaltgabel des Nachstellers der Stellspindel eingreifen.

Bei einem Bremsvorgang führt der mit einer Kolbenstange eines Bremszylinders gekoppelte Bremshebel eine Schwenkbewegung aus, mittels der, nach Überwindung eines sogenannten Leerweges, der Nachsteller und damit die Stellspindel verdreht wird.

Der bislang eingesetzte Bremshebel wird durch Schmieden hergestellt, wobei die Schaltstifte mit angeschmiedet werden.

Allerdings weist die bekannte Konstruktion eine Reihe durchaus gravierender Nachteile auf. So ist beispielsweise eine konstante Übersetzung über den gesamten Schwenkbereich des Bremshebels nicht möglich. Darüber hinaus kann aufgrund gegebener Toleranzen das Spiel im Antrieb der Stellspindel, das gleichzeitig das Lüftspiel zwischen der Bremsscheibe und den Bremsbelägen darstellt, nur sehr ungenau eingestellt werden.

Im Übrigen ist die Herstellung eines Schmiedeteiles gegenüber einem gegossenen erheblich aufwendiger und damit teurer, wobei der bekannte Bremshebel aufgrund der Konfiguration der angeschlossenen Schaltstifte, insbesondere hinsichtlich der geforderten Festigkeit und des zur Verfügung stehenden Bauraumes, bislang nicht als Gussteil ausgebildet werden kann.

In der EP 1 319 858 A2 ist eine Scheibenbremse geoffenbart, bei der an einem Zwischenelement ein Stirnradsegment angeordnet ist, wobei das Zwischenelement als separates Teil in einer Nut des Bremshebels einliegt und eine axiale Verschiebesicherung für seitlich ebenfalls in der Nut des Bremshebels gehaltene Kraftübertragungselemente bildet. Das Stirnradsegment ist dabei auf der den Stellspindeln zugeordneten Seite des Bremshebels positioniert und greift in ein in einer zentralen Antriebswelle gehaltenes Kronrad ein.

Eine von der Gattung abweichende Scheibenbremse ist aus der WO 96/34216 A1 bekannt, bei der das Stirnradsegment an der den Stellspindeln zugewandten Vorderseite des Bremshebels angeordnet ist, das in ein an einer Stellspindel gehaltenes Kronrad eingreift.

Der Erfindung liegt die Aufgabe zugrunde, eine Scheibenbremse der gattungsgemäßen Art so weiterzuentwickeln, dass ihre Funktionsfähigkeit verbessert und eine kostengünstigere Herstellung möglich ist.

Diese Aufgabe wird durch eine Scheibenbremse mit den Merkmalen des Anspruchs 1 gelöst.

Die Paarung Stirnradsegment/Kronrad ist annähernd spielfrei und bewirkt eine konstante Übersetzung über den gesamten Schwenkbereich des Hebels. Dadurch wird das Nachstellverhalten der gesamten Bremse in erheblichen Maße verbessert, wobei die Stellspindel exakter angetrieben wird, mit der Folge einer genauen Einstellung des Lüftspiels. Bevorzugt erfolgt dies über eine Schaltkulisse in der Stellspindel.

Die Erfindung erlaubt darüber hinaus die Herstellung des Bremshebels durch Gießen, wobei das Stirnradsegment, das sich in Schwenkrichtung des Bremshebels erstreckt, mit angegossen wird.

Im Wesentlichen ist der Bremshebel, zumindest hinsichtlich des angeformten Stirnradsegments, ohne eine aufwendige mechanische Bearbeitung einsetzbar.

Nach einer vorteilhaften Weiterbildung der Erfindung ist das Kronrad auf einer zentralen Antriebsspindel verdrehsicher befestigt, die zwischen zwei Stellspindeln angeordnet ist und die über eine Schaltkulisse, d.h. ein Getriebe mit den Stellspindeln in Verbindung steht.

Die Ausbildung des Bremshebels als Gussteil mit integriertem Stirnradsegment erlaubt eine Dimensionierung bei gleicher Belastungsfähigkeit, die nicht größer ist als die der bislang angeschmiedeten Schaltfinger, so dass die Optimierung der Scheibenbremse hinsichtlich der Funktionsfähigkeit der Nachstelleinrichtung bei Beibehaltung der bisherigen Bauraumgröße möglich ist, diese gegebenenfalls sogar reduziert werden kann.

Die Herstellungskosten des Bremshebels jedenfalls liegen weit unterhalb des bisherigen geschmiedeten Bremshebels, wodurch sich vor allem auch deshalb nennenswerte Vorteile ergeben, als Scheibenbremsen in großen Stückzahlen Verwendung finden.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine erfindungsgemäße Scheibenbremse in einer schematisch dargestellten, geschnittenen Draufsicht
- Figur 2: einen Teil der Scheibenbremse in einer perspektivischen Ansicht.

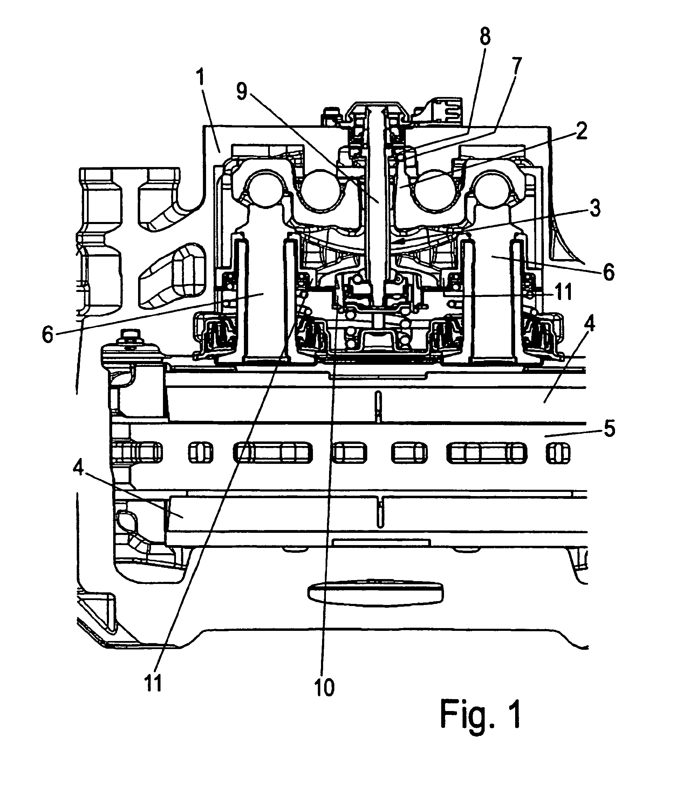

In der Figur 1 ist eine pneumatisch oder elektromechanisch betätigbare Scheibenbremse, insbesondere für ein Nutzfahrzeug dargestellt, mit einem eine Bremsscheibe 5 übergreifenden Bremssattel 1, einen Bremshebel 2 einer Zuspanneinrichtung, mit der Bremsbeläge 4 gegen die Bremsscheibe 5 pressbar sind, wobei zwei parallel und abständig zueinander angeordnete Stellspindeln 6 mittels des Bremshebels 2 unter axialer Verstellung gegen den zugeordneten Bremsbelag 4 drückbar sind.

Im Bremssattel 1 ist eine durch den Bremshebel 2 betätigbare Nachstelleinrichtung 3 angeordnet, mit der über eine axiale Verstellung der Stellspindeln 5 eine verschleißbedingte Änderung des Lüftspiels zwischen dem Bremsbelag 4 und der Bremsscheibe 5 im Wesentlichen ausgleichbar ist.

Die Nachstelleinrichtung 3 weist eine zentrale, parallel zu den Stellspindeln 6 verlaufende Antriebsspindel 9 auf, an der ein Antriebselement 10 in Form eines Zahnrades verdrehsicher gehalten ist, das mit zwei ebenfalls als Zahnräder ausgebildeten Getrieberädern 11 korrespondiert, die jeweils an den Stellspindeln 6 befestigt sind.

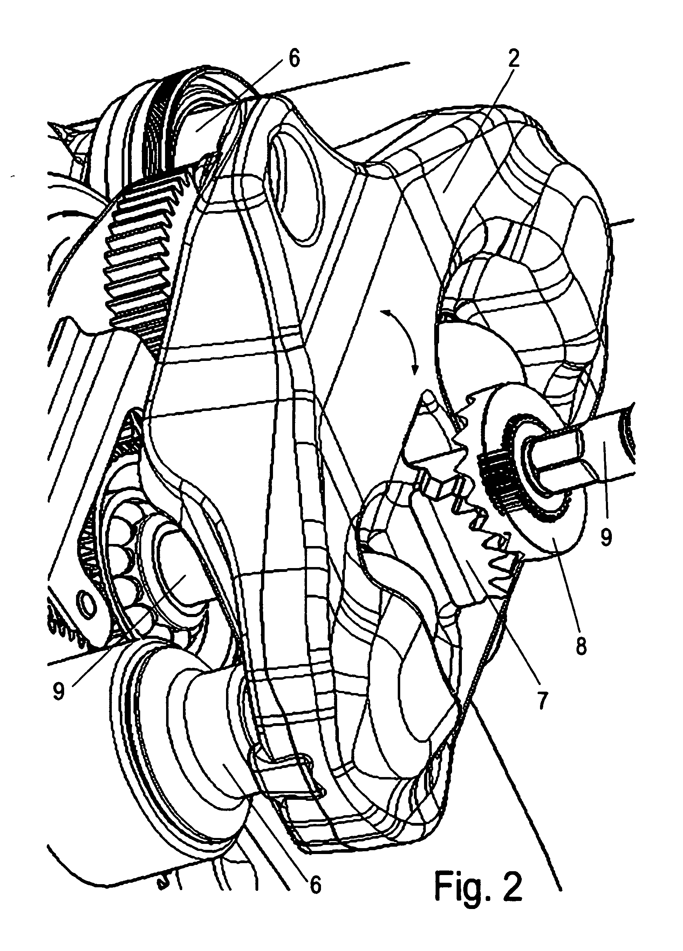

Zur Verdrehung der Antriebsspindel 9 ist an dieser an der dem Antriebselement 10 abgewandten Seite ein Kronrad 8 verdrehsicher angeschlossen, in das ein an den Bremshebel 2 angeformtes Stirnradsegment 7 eingreift (Figur 2).

Das Stirnradsegment 7, das sich in Schwenkrichtung des Bremshebels 2, entsprechend der Pfeilangabe erstreckt und bei jeder Betätigung des Bremshebels 2 eine Drehung des Kronrades 8 und damit der Antriebsspindel 9 bewirkt, ist einstückig mit dem als Gussteil ausgebildeten Bremshebel 2 verbunden.

## Patentansprüche

1. Pneumatisch oder elektromechanisch betätigbare Scheibenbremse, mit
a) einem eine Bremsscheibe (5) übergreifenden Bremssattel (1)
b) einer im Bremssattel (1) angeordneten, einen Bremshebel (2) aufweisenden Zuspanneinrichtung
c) zwei parallel und abständig zueinander angeordneten Stellspindeln (6), die mittels der Zuspanneinrichtung axial bewegbar sind
d) einer im Bremssattel (1) positionierten, durch den Bremshebel (2) betätigbaren Nachstelleinrichtung (3), mit der über eine axiale Verstellung der Stellspindeln (6) eine verschleißbedingte Änderung eines Lüftspiels zwischen einem Bremsbelag (4) und der Bremsscheibe (5) im Wesentlichen ausgleichbar ist,
e) einem am Bremshebel (2) angeordneten, sich in dessen Schwenkrichtung erstreckendes Stirnradsegment (7), das zur Nachstellung mit einem mit einer der Stellspindeln (6) in Wirkverbindung stehenden Kronrad (8) kämmt,
f) das verdrehsicher an einer zentral durch den Bremshebel (2) geführten und zwischen den Stellspindeln (6) drehbar gelagerten Antriebsspindel (9) befestigt ist, mit der über ein Getriebe die Stellspindeln (6) antreibbar sind,
**dadurch gekennzeichnet, dass**
das an der den Stellspindeln (6) gegenüberliegenden Rückseite des Bremshebels (2) angeordnete Stirnradsegment (7) einstückig mit dem als Gussteil ausgebildeten Bremshebel (2) verbunden ist.

2. Scheibenbremse nach Anspruch 1, **dadurch gekennzeichnet, dass** das Kronrad (8) verdrehsicher auf der Antriebsspindel (9) gehalten ist.

3. Scheibenbremse nach Anspruch 1 oder 2, **dadurch gekennzeichnet, dass** auf der Antriebsspindel (9) verdrehsicher ein Antriebselement (10) in Form eines Zahnrades befestigt ist, das mit einem auf der Stellspindel (6) gehaltenen Zahnrad (11) in Eingriff steht.

## Claims

1. A pneumatically or electromechanically actuated disk brake, having
a) a brake calliper (1) spanning a brake disk (5),
b) a brake application device arranged in the brake calliper (1) and comprising a brake lever (2),
c) two adjusting spindles (6) which are arranged parallel to one another and at an interval from one another, which are axially moveable by means of the brake application device,
d) an adjusting device (3) which can be actuated by the brake lever (2) and positioned in the brake calliper (1), with which, via an axial adjustment of the adjusting spindles (6), a wear-induced variation of the lift clearance between a brake lining (4) and the brake disk (5) can be substantially compensated for,
e) a spur gear segment (7), which is arranged on the brake lever (2) and extends in the pivoting direction thereof, which for adjustment purposes engages with a crown wheel (8) operatively connected to one of the adjusting spindles (6),
f) which is rotationally fixed on a drive spindle (9) which is guided centrally through the brake lever (2) and is rotatably mounted between the adjusting spindles (6), with which drive spindle the adjusting spindles (6) can be driven by way of a transmission mechanism,
**characterised in that**
the spur gear segment (7) which is arranged on the rear side of the brake lever (2) which lies opposite the adjusting spindles (6) is integrally connected to the brake lever (2), which is formed as a casting.

2. A disk brake according to claim 1, **characterised in that** the crown wheel (8) is held rotationally fixed on the drive spindle (9).

3. A disk brake according to claim 1 or 2, **characterised in that** a drive element (10) in the form of a gear wheel, which engages with a gear wheel (11) held on the adjusting spindle (6), is rotationally fixed on the drive spindle (9).

## Revendications

1. Frein à disque à commande pneumatique ou électromécanique, comprenant
(a) un étrier de frein (1) chevauchant un disque de frein (5),
(b) un dispositif de serrage, qui est disposé dans ledit étrier de frein (1) et est muni d'un levier de frein (2)
(c) deux broches de réglage (6) disposés en parallèle et à un écart l'une de l'autre, qui sont mobile en sens en axial moyennant ledit dispositif de serrage
(d) un moyen de rattrapage positionné dans ledit étrier de frein (1), qui est commandable moyennant ledit levier de rein (2), qui sert à égaliser essentiellement une modification d'un jeu d'aération entre une garniture de frein (4) et ledit disque de frein (5), qui est dû à l'usure, par un réglage axial desdites broches de réglage (6),
(e) un segment de pignon droit (7) disposé audit levier de frein (2) et s'étendant selon la direction de pivotement dudit levier, qui se trouve en prise dans une couronne dentée (8) en raccord opératoire avec une desdites broches de réglage (6),
(f) qui est fixée, de manière résistante à la torsion, à une bielle de commande (9) passée, en position centrale, par ledit levier de frein (2) et logée, de façon rotative, entre lesdites broches de réglage (6), laquelle sert à entraîner lesdites broches de réglage (6) via un engrenage,
**caractérisé en ce**
**que** ledit segment de pignon droit (7), qui est disposé au côté postérieur dudit levier de frein (2) en face desdites broches de réglage (6) est relié, de façon intégrale, audit levier de frein (2) configuré en tant qu'une pièce moulée en fonte.

2. Frein à disque selon la revendication 1, **caractérisé en ce que** ladite couronne dentée (8) est retenue sur ladite bielle de commande (9) d'une manière résistante à la torsion.

3. Frein à disque selon la revendication 1 ou 2, **caractérisé en ce qu'**un élément entraîneur (10) sous forme d'une roue dentée est fixée, de manière résistante à la torsion, sur ladite bielle de commande, qui se trouve en prise dans une roue dentée (11) retenue sur ladite broche de réglage (6).
